# EUROPEAN PATENT APPLICATION

(11) **EP 4 210 046 A1**
(43) Date of publication of application: **12.07.2023**
(21) Application number: 22211047.0
(22) Date of filing: 02.12.2022
(51) Int. Cl.: G10L 15/22, G06F 3/16, B60W 50/08, B60W 50/14, G01C 21/36, B60R 16/037

(54) **VOICE INTERACTION METHOD, APPARATUS, VEHICLE, AND STORAGE MEDIUM**

(30) Priority: 06.01.2022 CN 202210007465
(71) Applicant: Guangzhou Xiaopeng Motors Technology Co., Ltd., Guangzhou, Guangdong 510000 (CN)
(72) Inventor: GUO, Yalin, Guangzhou, 510000 (CN); FAN, Junfeng, Guangzhou, 510000 (CN); LUO, Xu, Guangzhou, 510000 (CN); HE, Hongjing, Guangzhou, 510000 (CN)
(74) Representative: Ran, Handong

(57) **Abstract**

Disclosed is a voice interaction method, comprising: executing, by an on-board system, an execution instruction directly executable by a vehicle in a customized solution of an on-board system function, if the vehicle is in an abnormal network state when the customized solution satisfies a preset non-voice trigger condition; and providing voice feedback on an execution result of the execution instruction. The trigger condition of the customized solution is a non-voice trigger condition, and may be triggered under an abnormal network state as well. In an abnormal network state, the on-board system executes a portion of the execution instructions directly executable by the vehicle under the non-voice trigger condition, such that the customized solution is at least partially executed to satisfy a portion of the user's needs. After the instruction is executed, an execution result is fed back by voice, and the user may learn the implemented portion of the solution, thereby improving use experience of the customized solution under an abnormal network state to a certain extent. Further disclosed are a feedback apparatus, a vehicle, and a storage medium.

## Description

### Field of Invention

The present disclosure relates to the field of transportation, and in particular to a voice interaction method, a voice interaction apparatus, a vehicle, and a computer-readable storage medium.

### Background

A customized solution for a vehicle system function greatly improves the convenience for a user to use a vehicle. The user customizes an on-board system function in advance. The customized solution comprises a voice trigger condition and an execution instruction. For example, when the user says "good morning" to a voice assistant in the cockpit of the vehicle, the voice assistant may determine that "good morning" is the trigger condition in the customized solution, and then communicate with a server. The voice server controls the vehicle to execute the instructions by completing multiple operations such as "setting the air conditioner in the cockpit of the vehicle to 26 °C, adjusting the seat backward, and closing the window". Thus, it is convenient for the user to achieve control over multiple vehicle functions using a simple voice trigger condition. However, this requires a voice trigger condition in the process of using the vehicle by the user. If the user is not accustomed to such a trigger condition, he/she may forget the voice trigger condition after getting on the vehicle. Where the trigger condition cannot be triggered, the vehicle cannot execute the instructions under the trigger condition. Furthermore, the above process relies on a normal network state. Where the vehicle encounters an abnormal network environment in the process of being used in a garage, an underground parking lot, an expressway, a tunnel, or the like, in which no network signal or only weak network signals may be received, problems may arise, e.g., incapable of trigging the trigger condition, incapable of issuing an execution instruction under the trigger condition, leading to poor user experience.

### Summary of Invention

In view of the foregoing, an embodiment of the present disclosure provides a voice interaction method, a voice interaction apparatus, a vehicle, and a computer-readable storage medium.

The present disclosure provides a voice interaction method, the method comprising:
executing, by an on-board system, an execution instruction directly executable by a vehicle in a customized solution of an on-board system function, if the vehicle is in an abnormal network state when the customized solution satisfies a preset non-voice trigger condition; and
providing voice feedback on an execution result of the execution instruction.

In this way, the trigger condition of the customized solution is a non-voice trigger condition, e.g., close of the door, such that the trigger of the customized solution conforms to user habits. It is not necessary for the user to memorize the statement of the voice trigger, and the state of "door closed" may be used as a trigger condition after the user closes the door. Moreover, the customized solution does not rely on the network any more, and may be triggered under an abnormal network state as well. In an abnormal network state, a portion of the execution instruction directly executable by the vehicle under the non-voice trigger condition is executed by the on-board system, such that the customized solution may be at least partially executed to satisfy a portion of the user's needs. After the instruction is executed, the execution result is fed back by voice, such that the user may learn the executed portion of the solution. This improves use experience of the customized solution under an abnormal network state to a certain extent.

The method comprises:
querying an execution mark of the execution instruction; and
determining, based on the execution mark, whether the execution instruction is directly executable by the vehicle or needs to be executed by using the network.

In this way, the execution mark of the execution instruction is queried to determine whether the execution instruction is executable by the vehicle or needs to be executed by using the network, i.e., to determine which execution instructions in the current customized solution are directly executable by the vehicle under an abnormal network state.

The method comprises:
transmitting all execution instructions to a cloud voice server if the customized solution includes at least one execution instruction that needs to be executed by using the network;
receiving a control instruction assembled and issued by the cloud voice server according to all the execution instructions if the vehicle is in a normal network state;
executing the control instruction by the on-board system; and
providing voice feedback on an execution result of the control instruction.

In this way, for a customized solution that includes at least one execution instruction that needs to be executed by using the network, it is necessary to transmit all execution instructions to the cloud server. If the network is in a normal state, the server will assemble all the execution instructions into one control instruction and issue the same. The on-board system will execute the control instruction and provide voice feedback on the execution result.

The method comprises:
determining that the vehicle is in an abnormal network state upon a successful transmission but failed reception of the control instruction within a predetermined time period; and
executing, by the on-board system, the execution instruction directly executable by the vehicle where the vehicle is in an abnormal network state.

In this way, if the execution instruction may be normally transmitted to the server, but no control instruction issued by the server is received within the predetermined time period, it is determined that the current network is in an abnormal state. In an abnormal state of the network, the execution instruction directly executable by the vehicle is directly executed by the on-board system, so as to satisfy a portion of the user's needs and improve user experience.

The method comprises:
determining that the vehicle is in an abnormal network state upon a failed transmission; and
executing, by the on-board system, the execution instruction directly executable by the vehicle where the vehicle is in an abnormal network state.

In this way, if the execution instruction cannot be transmitted to the server normally, a current abnormal network state is determined. Under an abnormal network state, the execution instruction directly executable by the vehicle is directly execute by the on-board system, so as to satisfy a portion of the user's needs and improve user experience.

The method further comprises:
executing, by the on-board system, the execution instructions if all the execution instructions of the customized solution are directly executable by the vehicle.

In this way, for the customized solution in which all the execution instructions are directly executable by the vehicle, the corresponding execution instructions may be directly executed by the on-board system without using the server under the condition that the non-voice trigger condition is satisfied.

The method further comprises:
receiving and storing a customized solution in a completion state issued by the cloud voice server, wherein the customized solution includes a preset non-voice trigger condition and at least one execution instruction having an execution mark.

In this way, the cloud voice server marks whether the execution instructions are each directly executable by the vehicle, and transmits the customized solution in a completion state to the vehicle and stores the same in the vehicle, such that the on-board system may determine an execution strategy of the execution instruction according to the execution mark when the non-voice trigger condition is satisfied subsequently.

The present disclosure further provides a voice interaction apparatus, comprising:
an execution module for executing, by an on-board system, an execution instruction directly executable by a vehicle in a customized solution of an on-board system function if the vehicle is in an abnormal network state under the condition that the customized solution satisfies a preset non-voice trigger condition; and
a feedback module for providing voice feedback on an execution result of the execution instruction.

In this way, the trigger condition of the customized solution is a non-voice trigger condition, such that the customized solution is no longer to be triggered depending on the network but may be triggered under an abnormal network state as well. In an abnormal network state, the on-board system executes a portion of the execution instruction directly executable by the vehicle under the non-voice trigger condition, such that the customized solution is executed at least partially to satisfy a portion of the user's needs. After the instruction is executed, the execution result is fed back by voice, such that the user may learn the executed portion of the solution. This improves use experience of the customized solution under an abnormal network state to a certain extent.

The present disclosure further provides a vehicle, which comprises a memory and a processor. A computer program is stored in the memory, and any of the above methods is implemented when the computer program is executed by the processor.

In this way, the trigger condition of the customized solution is a non-voice trigger condition, e.g., close of the door, such that the trigger of the customized solution conforms to user habits. It is not necessary for the user to memorize the statement of the voice trigger, and the state of "door closed" may be used as a trigger condition after the user closes the door. Moreover, the customized solution does not rely on the network any more, and may be triggered under an abnormal network state as well. In an abnormal network state, the on-board system executes a portion of the execution instruction directly executable by the vehicle under the non-voice trigger condition, such that the customized solution may be at least partially executed to satisfy a portion of the user's needs. After the instruction is executed, an execution result is fed back by voice, such that the user may learn the executed portion of the solution. This improves use experience of the customized solution under an abnormal network state to a certain extent.

The present disclosure further provides a nonvolatile computer-readable storage medium. When the computer program is executed by one or more processors, the method described in any one of the above embodiments is implemented.

In this way, the trigger condition of the customized solution is a non-voice trigger condition, such that the customized solution is no longer to be triggered depending on the network but may be triggered under an abnormal network state as well. In an abnormal network state, the on-board system executes a portion of the execution instruction directly executable by the vehicle under the non-voice trigger condition, such that the customized solution is executed at least partially to satisfy a portion of the user's needs. After the instruction is executed, an execution result is fed back by voice, such that the user may learn the executed portion of the solution. This improves use experience of the customized solution under an abnormal network state to a certain extent.

Additional aspects and advantages of the embodiments of the present disclosure will be partially described in the following description, and some will become apparent from the following description, or will be learned from the practice of the present disclosure.

### Brief Description of Drawings

The above and/or additional aspects and advantages of the present disclosure will become self-evident and easily understood from the description of the embodiments in combination with the accompanying drawings below, in which:
Fig. 1 is a schematic flowchart of a voice interaction method according to the present disclosure;
Fig. 2 is schematic modules of a voice interaction apparatus according to the present disclosure;
Fig. 3 is a schematic interaction of the voice interaction method of the present disclosure;
Fig. 4 is a schematic flowchart of the voice interaction method of the present disclosure;
Fig. 5 is a schematic flowchart of the voice interaction method of the present disclosure;
Fig. 6 is a schematic flowchart of the voice interaction method of the present disclosure;
Fig. 7 is a schematic flowchart of the voice interaction method of the present disclosure;
Fig. 8 is a schematic flowchart of the voice interaction method of the present disclosure;
Fig. 9 is a schematic scenario of the voice interaction method of the present disclosure;
Fig. 10 is a schematic scenario of the voice interaction method of the present disclosure; and
Fig. 11 is a schematic interaction of the voice interaction method of the present disclosure.

### Detailed Description

The following is a detailed description of embodiments of the present disclosure whose examples are shown in the accompanying drawings. In the drawings, same or similar reference numerals always indicate same or similar elements or elements having same or similar functions. The embodiments described below by reference to the accompanying drawings are exemplary and are merely intended to explain the embodiments of the present disclosure and are not to be construed as limiting the embodiments of the present disclosure.

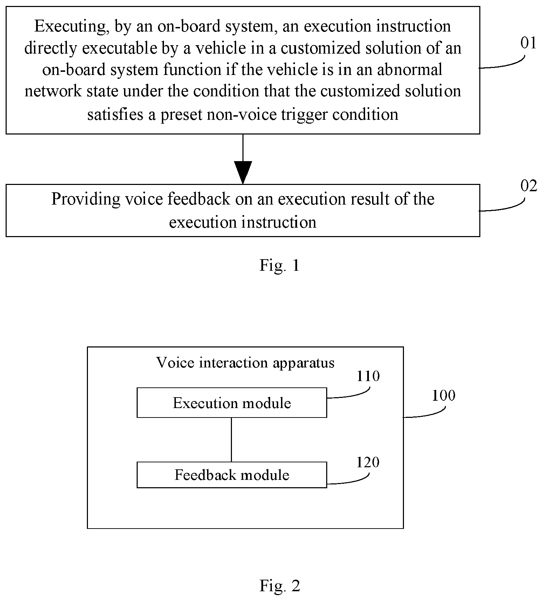

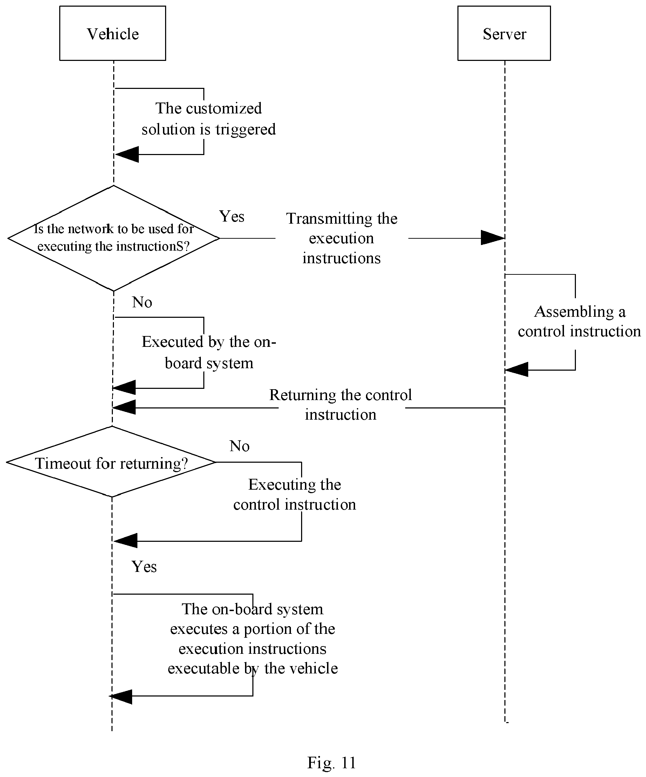

Referring to Fig. 1 and Fig. 11, the present disclosure provides a voice interaction method, comprising the following steps.

In step 01, an execution instruction directly executable by a vehicle in a customized solution of an on-board system function is executed by an on-board system if the vehicle is in an abnormal network state under the condition that the customized solution satisfies a preset non-voice trigger condition.

In step 02, voice feedback is provided on an execution result of the execution instruction.

Referring to Fig. 2, the present disclosure further provides a voice interaction apparatus 100. The voice interaction method of the present disclosure may be implemented by the voice interaction apparatus 100. The voice interaction apparatus 100 includes an execution module 110 and a feedback module 120. Step 01 may be implemented by the execution module 110, and step 02 may be implemented by the feedback module 120. In other words, the execution module 110 is used for executing an execution instruction directly executable by a vehicle in a customized solution of an on-board system function by an on-board system if the vehicle is in an abnormal network state under the condition that the customized solution satisfies a preset non-voice trigger condition. And the feedback module 120 is used for providing voice feedback on an execution result of the execution instruction.

In an embodiment of the present disclosure, a vehicle is further provided. The vehicle comprises a memory and a processor. A computer program is stored in the memory, and the processor is used for executing an execution instruction directly executable by the vehicle in a customized solution of an on-board system function by an on-board system if the vehicle is in an abnormal network state under the condition that the customized solution satisfies a preset non-voice trigger condition, and for providing voice feedback on an execution result of the execution instruction.

The customized solution of the on-board system function includes a preset non-voice trigger condition and one or more execution instructions under the non-voice trigger. Among them, the non-voice trigger condition refers to a non-voice trigger mode of the customized solution, i.e., it is not necessary for the customized solution to be triggered by a user's voice request. Non-voice trigger conditions include time conditions, location conditions, vehicle states, etc. The execution instruction refers to an automatic executive operation of the on-board system function, e.g., setting an air conditioning parameter, adjustment a seat, and using a multimedia function, under the condition that the non-voice trigger condition is satisfied.

The customized solution provides a user with great convenience in driving. For example, after getting on the vehicle, the user often performs a series of settings on the vehicle. It is cumbersome if these settings are operated by the user one by one. Expressions like "good morning" and "let's go" have been previously used as voice trigger conditions in some vehicles. Such a solution needs to be memorized and accustomed to by the user. If the user does not have such habits, he/she may forget the expressions after getting on the vehicle. If "good morning" is not said to a voice assistant, the trigger condition will not be triggered, such that subsequent executions will not be possible. By customizing a solution and setting the trigger condition as close of the door and the adjustment of a related on-board system function as execution instructions, when the user gets on the vehicle and closes the door, the on-board system will automatically execute corresponding execution instructions in the subsequent process of vehicle use.

In the process of customizing the solution, a cloud voice server will store the solution customized by the user. When the trigger condition is satisfied, the server will assemble the execution instructions under the trigger condition into a control instruction executable by the vehicle, and issue the same to the vehicle for execution by the on-board system. In this process, the vehicle needs to rely on a good network environment to communicate with the server. If the network is in an abnormal state, the trigger of the customized solution will fail.

In the present disclosure, the trigger condition of the customized solution is a non-voice trigger condition. Compared with a voice trigger condition, the non-voice trigger condition does not require uploading of a voice request for triggering the customized solution to the server. Therefore, the trigger of the customized solution no longer depends on the network environment.

The execution instructions include a portion directly executable by the vehicle and a portion that needs to be executed by using the network. The execution instruction executable by the vehicle is a definite action instruction, e.g., setting an air conditioner temperature, opening or closing a window, while the execution instruction that needs to be executed by using the network is an action instruction to be determined by querying via the server, e.g., navigating home and playing singer A's song B.

It should be noted that an execution instruction directly executable by the vehicle may still be processed by the server through the network. The execution instruction may be assembled and issued by the server and then executed by the vehicle.

During the execution of the customized solution, the execution instruction directly executable by the vehicle will be executed by the on-board system in an abnormal network state, such that the customized solution will be executed at least partially rather than completely fail to be executed due to network abnormality, thereby satisfying the user's needs at least partially.

After the execution, an execution result will be fed back to the user by voice, such that the user may learn the execution state of the customized solution in a current state.

In this way, in the voice interaction method, the voice interaction apparatus 100, and the vehicle of the present disclosure, the trigger condition of the customized solution is a non-voice trigger condition, such that the trigger of the customized solution is no longer dependent on the network, and may be triggered in an abnormal network state as well. In an abnormal network state, the on-board system executes the portion of the execution instructions directly executable by the vehicle under the non-voice trigger condition, such that the customized solution may be executed at least partially to satisfy a portion of the user's needs. After the instruction is executed, the execution result is fed back by voice, such that the user may learn the executed portion in the solution. This improves use experience of the customized solution under an abnormal network state to a certain extent.

The voice interaction method further comprises the following step.

A customized solution in a completion state issued by the cloud voice server is received and stored. The customized solution comprises a preset non-voice trigger condition and at least one execution instruction having an execution mark.

This step may be implemented by the execution module 110. In other words, the execution module 110 is used for receiving and storing the customized solution in a completion state issued by the cloud voice server.

The processor is used for receiving and storing the customized solution in a completion state issued by the cloud voice server.

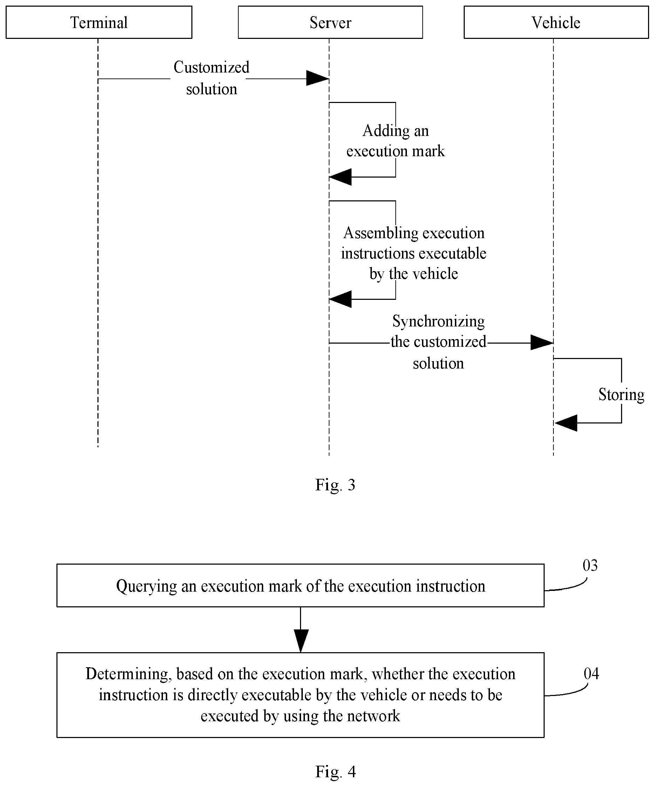

Referring to Fig. 3, the user inputs a non-voice trigger condition and execution instructions at a terminal device to customize a solution of an on-board system function, and submits a completed customized solution to a server. According to the instruction types and unique execution identifiers of the execution instructions, the server determines, one by one, whether the execution instructions in the customized solution are executable only after real-time query through the network or are directly executable by the vehicle. An execution mark is then added to each of the execution instructions according to a determination result, for marking an execution mode of the execution instruction. The server assembles the execution instructions directly executable by the vehicle into a data format recognizable and executable by the on-board system, and then issues the relevant information of the customized solution, including the execution mark and an assembled execution instruction, to the vehicle for storage.

In this way, the cloud voice server marks whether the execution instructions are each directly executable by the vehicle, and issues the customized solution in a completion state to the vehicle for storage therein, such that the on-board system may determine an execution strategy of the execution instruction according to the execution mark where the non-voice trigger condition is satisfied subsequently.

Referring to Fig. 4 and Fig. 11, the voice interaction method further comprises the following steps.

In step 03, the execution mark of the execution instruction is queried.

In step 04, it is determined whether the execution instruction is directly executable by the vehicle or needs to be executed by using the network according to the execution mark.

Steps 03 and 04 may be implemented by the execution module 110, or in other words, the execution module 110 is used for querying the execution mark of the execution instruction, and for determining whether the execution instruction is directly executable by the vehicle or needs to be executed by using the network according to the execution mark.

The processor is used for querying the execution mark of the execution instruction, and for determining whether the execution instruction is directly executable by the vehicle or needs to be executed by using the network according to the execution mark.

As stated above, upon completion of customization, the solution will be saved in the vehicle synchronously. Each of the execution instructions in the customized solution has been added with an execution mark, which may be directly queried by the vehicle.

During the execution of the customized solution, when the preset non-voice trigger condition is satisfied, the vehicle queries the execution mark of each of the execution instructions in the customized solution to confirm whether the execution instructions are each directly executable by the vehicle or needs to be executed by using the network.

In this way, the execution mark of the execution instruction is queried to determine whether the execution instruction is executable by the vehicle or needs to be executed by using the network, i.e., it determines which execution instructions in a current customized solution are directly executable by the vehicle under an abnormal network state.

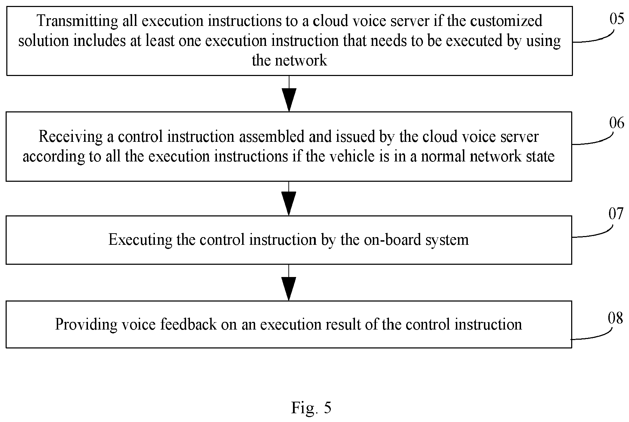

Referring to Fig. 5 and Fig. 11, the voice interaction method comprises the following steps.

In step 05, all the execution instructions are transmitted to the cloud voice server if the customized solution includes at least one execution instruction that needs to be executed by using the network.

In step 06, a control instruction issued by the cloud voice server according to all the execution instructions is received if the vehicle is in a normal network state.

In step 07, the control instruction is executed by the on-board system.

In step 08, voice feedback is provided on an execution result of the control instruction.

Steps 05-07 may be implemented by the execution module 110, and step 08 may be implemented by the feedback module 120. In other words, the execution module 110 is used for transmitting all the execution instructions to the cloud voice server when the customized solution includes at least one execution instruction that needs to be executed by using the network, for receiving a control instruction assembled and issued by the cloud voice server according to all the execution instructions when the vehicle is in a normal network state, and for executing the control instruction by the on-board system. The feedback module is used for providing voice feedback on an execution result of the control instruction.

The processor is used for transmitting all the execution instructions to the cloud voice server when the customized solution includes at least one execution instruction that needs to be executed by using the network, for receiving a control instruction assembled and issued by the cloud voice server according to all the execution instructions when the vehicle is in a normal network state, for executing the control instruction by the on-board system, and for providing voice feedback on an execution result of the control instruction.

When the vehicle end confirms that at least one of the execution instructions needs to be executed by using the network after querying the execution mark of each of the execution instructions, it transmits all the execution instructions to the server. If the network state is normal at this point, the execution instructions may be transmitted successfully. After being queried by the server, the execution instruction will be assembled into a control instruction and successfully returned to the vehicle. The on-board system will execute the control instruction and provide voice feedback on an execution result.

In this way, for a customized solution including at least one execution instruction that needs to be executed by using the network, it is necessary to transmit all the execution instructions to the cloud server. If the network is in a normal state, the server will assemble all the execution instructions into one control instruction and issue the same. The on-board system will execute the control instruction and provide voice feedback on an execution result.

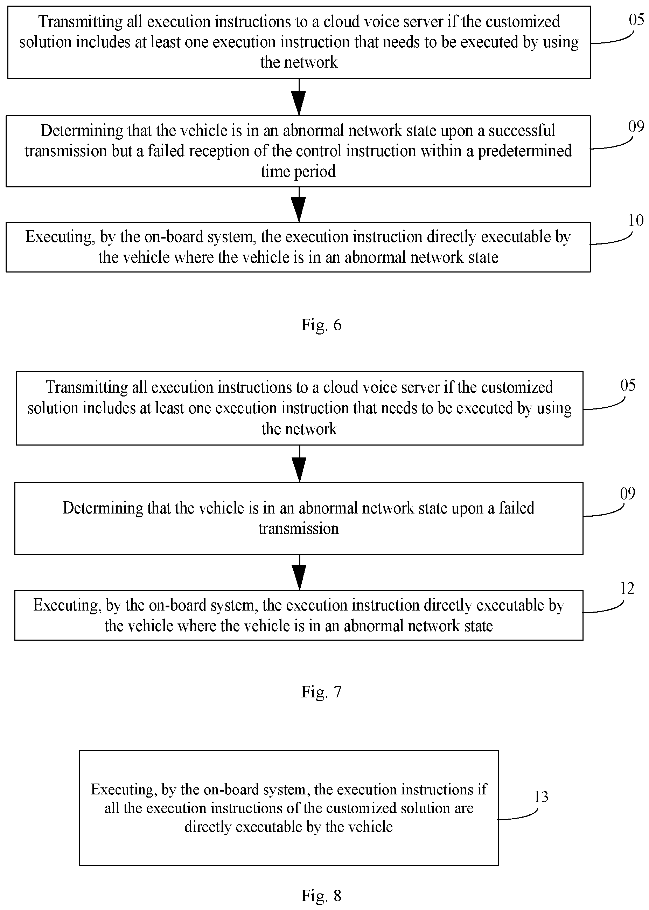

Referring to Fig. 6 and Fig. 11, the voice interaction method comprises the following steps.

In step 09, it is determined that the vehicle is in an abnormal network state if the transmission is successful, but no control instruction is received within a predetermined time period.

In step 10, the execution instruction directly executable by the vehicle is executed by the on-board system when the vehicle is in an abnormal network state.

Steps 09 and 10 may be implemented by the execution module 110. In other words, the execution module 110 is used for determining that the vehicle is in an abnormal network state when the execution instruction is successfully transmitted but no control instruction is received within a predetermined time period, and for executing the execution instruction directly executable by the vehicle by the on-board system when the vehicle is in an abnormal network state.

The processor is used for determining that the vehicle is in an abnormal network state when an execution instruction is transmitted successfully, but no control instruction is received within the predetermined time period, and for executing the execution instruction directly executable by the vehicle by the on-board system when the vehicle is in an abnormal network state.

In the case of successful transmission but failed reception, i.e., the vehicle successfully uploads the execution instructions to the server, but could not receive a control instruction returned by the server after query and assembly, in consideration of effectiveness of the execution of the customized solution, a predetermined waiting period, e.g., 3s or 5s is set, and if no control instruction is returned by the server within such a predetermined period, it is determined that the current network state is abnormal. Since the vehicle has queried the execution marks of the execution instructions to confirm the execution instructions that are executable by the vehicle, these execution instructions are directly executed by the on-board system.

In this way, if the execution instructions may be normally transmitted to the server, but no control instruction issued by the server is received within the predetermined time period, it is determined that the current network is in an abnormal state. In an abnormal state of the network, the execution instructions directly executable by the vehicle are executed by the on-board system, thereby to satisfy a portion of the user's needs and improve user experience.

Referring to Fig. 7 and Fig. 11, the voice interaction method comprises the following steps.

In step 11, it is determined that the vehicle is in an abnormal network state if the transmission fails.

In step 12, the execution instruction of the vehicle directly executable by the vehicle is executed by the on-board system when the vehicle is in an abnormal network state.

Steps 11 and 12 may be implemented by the execution module 110. In other words, the execution module 110 is used for determining that the vehicle is in an abnormal network state when the transmission of the execution instruction fails, and for executing the execution instruction of the vehicle directly executable by the vehicle through the on-board system when the vehicle is in an abnormal network state.

The processor is used for determining that the vehicle is in an abnormal network state when the transmission of the execution instruction fails, and for executing the execution instruction of the vehicle directly executable by the vehicle through the on-board system when the vehicle is in an abnormal network state.

Transmission failures means that the vehicle fails to upload an execution instruction to the server. The transmission state of an execution instruction may be confirmed by reading a network information log and the like or according to whether the vehicle receives a control instruction within a predetermined time period. In case of transmission failure, it is determined that the current network state is abnormal. Since the vehicle has queried the execution marks of the execution instructions to determine the execution instructions executable by the vehicle, these execution instructions are directly executed by the on-board system in such a case.

In this way, if the execution instruction cannot be transmitted to the server normally, it is determined that the network is currently in an abnormal state. Under an abnormal network state, the execution instructions directly executable by the vehicle are executed by the on-board system, thereby to satisfy the user's needs partially and improve user experience.

Referring to Fig. 8 and Fig. 11, the voice interaction method further comprises the following steps.

In step 13, the execution instructions of the customized solution are executed by the on-board system if all the instructions are directly executable by the vehicle.

Step 13 may be implemented by the execution module 110. In other words, the execution module 110 is used for executing the execution instructions of the customized solution by the on-board system where all the instructions are directly executable by the vehicle.

The processor is used for executing execution instructions of the customized solution by the on-board system when all the instructions are directly executable by the vehicle.

It may be understood that, if all the execution instructions of a certain customized solution are executable by the vehicle without using the network, then after the customized solution is triggered, the execution instructions may be directly executed by the on-board system without having to be uploaded onto the server regardless of whether the network state is normal or not.

In this way, for a customized solution in which the execution instructions are all directly executable by the vehicle, corresponding execution instructions may be directly executed by the on-board system without using the server where the non-voice trigger condition is satisfied.

The present disclosure will be illustrated below with two examples:

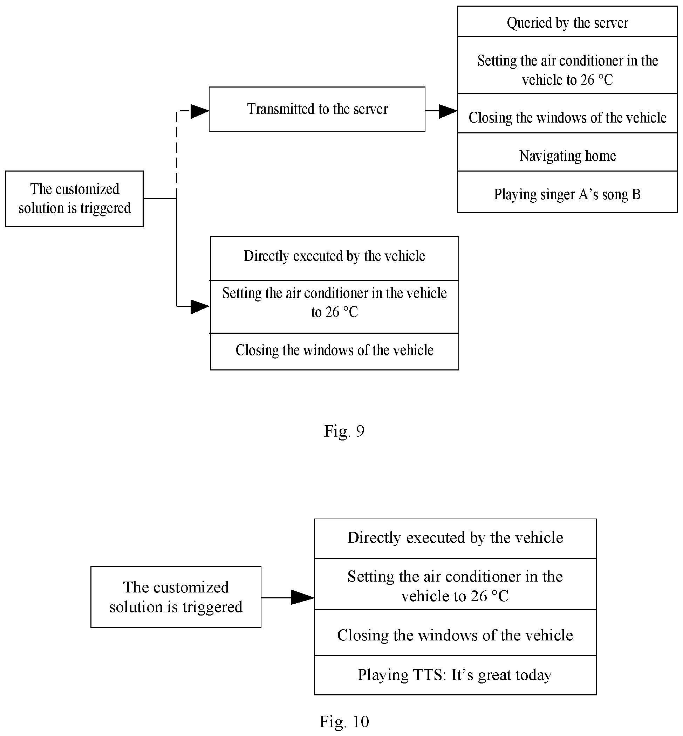

### Example 1 (referring to Fig. 9):

The customized solution is as follows.

Non-voice trigger conditions include: the driver getting on the vehicle at 18:30 from Monday to Friday.

Execution instructions include: setting the air conditioner in the vehicle to 26 °C, closing the windows of the vehicle, navigating home, and playing singer A's song B.

Of these execution instructions, setting the air conditioner to 26 °C and closing the windows of the vehicle are directly executable by the vehicle, while navigating home and playing singer A's song B need to be executed by using the network.

When the solution is triggered and if the network state is normal, after querying the instructions of navigating home and playing singer A's song B, the server assembles the four execution instructions including setting the air conditioner in the vehicle to 26 °C, closing the windows of the vehicle, navigating home, and playing singer A's song B into one control instruction and issues the control instruction to the vehicle for execution by the on-board system and providing voice feedback on an execution result.

However, when the vehicle is in an abnormal network environment in an underground garage, it is difficult to successfully transmit a query request by the execution instruction to the cloud. Or alternatively, upon successful transmission, it is difficult or even impossible to completely receive the control instruction transmitted by the cloud within a predetermined time period. If the vehicle still fails to receive a complete result returned from the cloud for a predetermined time period after the customized solution is triggered, the two executions including setting the air conditioner in the vehicle to 26 °C and closing the windows of the vehicle that are directly executable by the vehicle will be executed by the on-board system.

### Example 2 (referring to Fig. 10):

The customized solution is as follows.

Non-voice trigger conditions include: the driver getting on the vehicle at 18:30 from Monday to Friday.

Execution instructions include: setting the air conditioner in the vehicle to 26 °C, closing the windows of the vehicle, and playing TTS: It's great today.

These three instructions are all directly executable by the vehicle.

When the user gets off work, he/she gets on the vehicle at 18:30 from the driver's side, and the customized solution is triggered. After the solution is triggered, no matter whether the user is in an environment of normal network state or not, the vehicle confirms that all the execution instructions are directly executable by the vehicle without using the network after querying the execution marks. Then the above execution instructions are directly executed, and voice feedback will be provided to an execution result.

In the description of this specification, description concerning the reference terms "one embodiment", "some embodiments", "exemplary embodiment", "example", "specific example" or "some examples" means that specific features, structures, materials or characteristics described in combination with the embodiment(s) or example(s) are included in at least one embodiment or example of the present disclosure. In this specification, the exemplary representation of the above terms does not necessarily refer to a same embodiment or example. Moreover, specific features, structures, materials, or characteristics described may be combined in a suitable manner in any one or more embodiments or examples.

Description of any process or method in the flowcharts or otherwise described herein may be interpreted to represent a module, a fragment, or a portion of codes including one or more executable instructions for implementing steps of a particular logical function or process, and the scope of a preferred embodiment of the present disclosure covers additional implementations. Functions may not be executed in orders shown or discussed, including substantially simultaneous or reverse orders in which execution is performed based on functions involved, as should be appreciated by those skilled in the art to which the embodiments of the present disclosure belong.

The above illustrates and describes embodiments of the present disclosure, but it should be appreciated that the above embodiments are exemplary and are not to be construed as limiting the present disclosure. Those skilled in the art may make changes, modifications, substitutions and variations to the above embodiments within the scope of the present disclosure.

## Claims

1. A voice interaction method, **characterized by**:
executing, by an on-board system, an execution instruction directly executable by a vehicle in a customized solution of an on-board system function, if the vehicle is in an abnormal network state when the customized solution satisfies a preset non-voice trigger condition; and
providing voice feedback on an execution result of the execution instruction.

2. The method according to claim 1, wherein the method comprises:
querying an execution mark of the execution instruction; and
determining, based on the execution mark, whether the execution instruction is directly executable by the vehicle or needs to be executed by using the network.

3. The method according to claim 2, wherein the method comprises:
transmitting all execution instructions to a cloud voice server if the customized solution includes at least one execution instruction that needs to be executed by using the network;
receiving a control instruction assembled and issued by the cloud voice server according to all the execution instructions if the vehicle is in a normal network state;
executing the control instruction by the on-board system; and
providing voice feedback on an execution result of the control instruction.

4. The method according to claim 3, wherein the method comprises:
determining that the vehicle is in an abnormal network state upon a successful transmission but a failed reception of the control instruction within a predetermined time period; and
executing, by the on-board system, the execution instruction directly executable by the vehicle where the vehicle is in an abnormal network state.

5. The method according to claim 3, wherein the method comprises:
determining that the vehicle is in an abnormal network state upon a failed transmission; and
executing, by the on-board system, the execution instruction directly executable by the vehicle where the vehicle is in an abnormal network state.

6. The method according to claim 2, wherein the method further comprises:
executing, by the on-board system, the execution instructions if all the execution instructions of the customized solution are directly executable by the vehicle.

7. The method according to claim 1, wherein the method further comprises:
receiving and storing a customized solution in a completion state issued by the cloud voice server, wherein the customized solution includes a preset non-voice trigger condition and at least one execution instruction having an execution mark.

8. A voice interaction apparatus, **characterized by**:
an execution module for executing, by an on-board system, an execution instruction directly executable by a vehicle in a customized solution of an on-board system function, if the vehicle is in an abnormal network state when the customized solution satisfies a preset non-voice trigger condition; and
a feedback module for providing voice feedback on an execution result of the execution instruction.

9. The voice interaction apparatus according to claim 8, further comprising:
means for querying an execution mark of the execution instruction; and
means for determining, based on the execution mark, whether the execution instruction is directly executable by the vehicle or needs to be executed by using the network.

10. The voice interaction apparatus according to claim 9, further comprising:
means for transmitting all execution instructions to a cloud voice server if the customized solution includes at least one execution instruction that needs to be executed by using the network;
means for receiving a control instruction assembled and issued by the cloud voice server according to all the execution instructions if the vehicle is in a normal network state;
means for executing the control instruction by the on-board system; and
means for providing voice feedback on an execution result of the control instruction.

11. The voice interaction apparatus according to claim 10, further comprising:
means for determining that the vehicle is in an abnormal network state upon (a) a failed transmission or (b) a successful transmission but a failed reception of the control instruction within a predetermined time period; and
means for executing, by the on-board system, the execution instruction directly executable by the vehicle where the vehicle is in an abnormal network state.

12. The voice interaction apparatus according to claim 10, further comprising:
means for executing, by the on-board system, the execution instructions if all the execution instructions of the customized solution are directly executable by the vehicle.

13. The voice interaction apparatus according to claim 9, further comprising:
means for receiving and storing a customized solution in a completion state issued by the cloud voice server, wherein the customized solution includes a preset non-voice trigger condition and at least one execution instruction having an execution mark.

14. A vehicle, wherein the vehicle comprises a memory and a processor, a computer program is stored in the memory, and wherein the method according to any one of claims 1-7 is implemented when the computer program is executed by the processor.

15. A nonvolatile computer-readable storage medium for a computer program, wherein the method of any one of claims 1-7 is implemented when the computer program is executed by one or more processors.
